# EUROPÄISCHE PATENTANMELDUNG

(11) **EP 1 394 338 A1**
(43) Veröffentlichungstag der Anmeldung: **03.03.2004**
(21) Anmeldenummer: 02018586.4
(22) Anmeldetag: 19.08.2002
(51) Int. Cl.: E04G 9/05, E04C 2/24, B32B 21/08

(54) **Verfahren zum Vergüten durch Beschichten der Oberflächen von Trägertafeln, insbesondere von Holztafeln, und eine beschichtete Trägertafel, insbesondere Holztafel**

(71) Anmelder: Hoffmann, Dirk, 31 348 Bad Münder (DE)
(72) Erfinder: Hoffmann, Dirk, 31848 Bad Münder (DE); Jahns, Horst, 31832 Springe (DE)
(74) Vertreter: Moser, Jörg Michael, Dipl.-Ing.

(57) **Zusammenfassung**

Die Erfindung betrifft ein Verfahren zum Vergüten durch Beschichten der Oberflächen einer Trägertafel (1), insbesondere einer Holztafel, bei dem eine Beschichtung (2) aus Duroplast-Kunststoff aufgebracht wird und eine beschichtete Trägertafel, insbesondere Holztafel.

Um ein einfaches Verfahren zum Vergüten durch Beschichten der Oberflächen von Trägertafel und eine beschichtete Trägertafel zu schaffen, deren Oberflächenbeschichtung eine optimierte Standzeit aufweist, wird vorgeschlagen, dass bei Umgebungstemperatur und Umgebungsdruck auf zumindest die Oberseite der Trägertafel ein Duroplast-Kunststoff in fließfähigem Zustand aufgetragen und verteilt wird und nach dem Verteilen bei Umgebungstemperatur und Umgebunsdruck ausgehärtet wird. In Bezug auf die Trägertafel wird vorgeschlagen dass die Beschichtung (2) aus einem äußeren Deckbereich (2b) und einem darunter liegenden Verbundbereich (2a) besteht, der Verbundbereich (2a) aus miteinander im Eingriff stehenden Trägerplattenbestandteilen und ausgehärtetem Duroplast-Kunststoff besteht.

## Beschreibung

Die Erfindung betrifft ein Verfahren zum Vergüten durch Beschichten der Oberflächen von Trägertafeln, insbesondere von Holztafeln, nach dem Oberbegriff des Anspruches 1.

Außerdem betrifft die Erfindung eine Trägertafel, insbesondere Holztafel, nach dem Oberbegriff des Anspruches 13.

Es ist bekannt, aus Holzwerkstoffen bestehende, industriell gefertigte Schaltafeln oder Schalhäute mit einer Oberflächenvergütung aus Kunstharzen zu versehen. Dies geschieht bisher durch Auftragen von Folien oder Bahnen aus Phenolharzen, welche anschließend heiß verpresst werden. Die so erzeugte Oberfläche umschließt die Schaltafel oder Schalhaut nicht vollständig und neigt wegen der geringen Elastizität der Phenolharze schon nach wenigen Einsätzen zur Rissbildung und damit zu Undichtigkeiten, insbesondere gegenüber Feuchtigkeit, die ein Aufquellen der Schaltafel oder der Schalhaut bewirkt.

Mechanischer und natürlicher Verschleiß der Oberflächen der Schaltafeln erfordern nach einer gewissen Einsatzdauer eine Sanierung bzw. Reparatur oder ein Auswechseln der Schaltafeln. Die Entscheidung, die Schaltafeln zu reparieren oder zu erneuern, ist ein nicht unwesentlicher Wirtschaftlichkeitsfaktor, der auch im Verhältnis zur Einsatzhäufigkeit bzw. Lebensdauer der einzelnen Schaltafeln zu sehen ist. Ein primärer Indikator für die Einsatzhäufigkeit einer Schaltafel ist die sogenannte Abriebfestigkeit der Oberfläche derselben, die nach anerkannten Methoden nachzuweisen ist.

Hinzu kommt, dass bei den bekannten Schaltafeln aus Holzwerkstoffen die das Eindringen von Feuchtigkeit hemmende Oberflächenvergütung unzureichend ist, weil an den Seitenkanten und Stirnkanten der Schaltafel nur eine unzureichende oder überhaupt keine Oberflächenvergütung erfolgt.

Aus der deutschen Offenlegungsschrift DE 23 57 516 A1 ist bereits ein Verfahren zur Herstellung einer Schalplatte für Betonschalungen bekannt. Zur Erhöhung der Standzeiten der Schalplatten werden die aus einem Holzwerkstoff bestehenden Schaltafeln, vorzugsweise eine für das Bauwesen spezialgesperrte Platte oder auch eine Pressspanplatte, zumindest an ihren gegenüberliegenden Seiten mit einer Beschichtung versehen. Die Beschichtung besteht aus einer mit einem duroplastischen Harz getränkten Glasfasermatte, die auf die zu beschichtende Fläche der Schaltafel zugeschnitten ist und eine Dicke von etwa 2 mm aufweist. Für die Durchführung der Beschichtung wird in Sandwichbauweise eine untere getränkte Glasfasermatte, die Holzplatte und eine obere getränkte Glasfasermatte in ein Unterwerkzeug einer Presse eingelegt. Anschließend wir das Presswerkzeug geschlossen und die getränkten Glasfasermatten werden unter Druck und einer Temperatur von etwa 140° ausgehärtet. Während des Pressvorganges fließt das Harz und die Glasfasermatte um die Kanten der Schalplatte herum, so das eine geschlossene Beschichtung entsteht. Um diesen Fließvorgang der Glasfasermatte und des Harzes zu unterstützen und die Ausbildung von Luftnestern zu vermeiden, ist die Glasfasermatte gezielt mit einem geringen Untermaß in Bezug auf die Fläche der Schalplatte zugeschnitten. Vorzugsweise wird für dieses Verfahren eine mit Harz getränkte und durch längere Lagerung wieder weich gewordene Glasfasermatte verwendet. Die Glasfasermatte geht hierbei eine haftende Verbindung mit der Oberfläche und den Kanten des Holzwerkstoffes ein. Die hierdurch entstehende Beschichtung soll hochglatt sein.

Dieses Verfahren zur Herstellung einer mit einem Kunststoff ummantelten Spanplatte aus einem Holzwerkstoff ist sehr aufwendig, da die Aushärtung der mit Harz getränkten Glasfasermatten in einem Presswerkzeug unter hohem Druck und einer Temperatur von etwa 140° C erfolgen muss. Für jede Schaltafelabmessung muss daher ein eigenes Presswerkzeug bereit gestellt werden. Auch ist die Zwischenlagerung der bereits mit Harz getränkten Glasfasermatten sehr aufwendig.

Auch ist bereits in der europäischen Patentanmeldung EP 0 401 551 A1 ein Verfahren zur Beschichtung einer Schaltafel aus Sperrholz beschrieben. Die rohe oder von einer bereits vorhandenen Beschichtung befreite Schaltafel wird über eine Schlitzdüse auf ihrer Oberseite mit einer ersten Grundschicht aus einer lösungsmittelhaltigen flüssigen Kunstharzmischung beschichtet, die anschließend aushärtet. In einem zweiten Arbeitsgang wird die Unterseite der Schaltafel in der gleichen Weise wie die Oberseite beschichtet. Anschließend wird die Schaltafel auf Maß geschnitten, die Schnittkanten ebenfalls mit der Grundschicht versehen und die so beschichtete Schaltafel in einen Metallrahmen eingelegt. Hierbei geht die Grundschicht eine haftende Verbindung mit den Oberflächen der Schaltafel ein. Ob und wie die Oberfläche der Schaltafel vor der Beschichtung vorbereitet wird, ist in dieser europäischen Patentanmeldung nicht beschrieben. Der Spalt zwischen dem Metallrahmen und den Schnittkanten der Schaltafel wird mit einer selbsthärtenden Spachtelmasse verschlossen. Anschließend wird eine zweilagige Deckschicht aus einer flüssigen Kunstharzmischung auf die mit der Grundschicht versehene Oberseite aufgebracht, die später mit dem Beton in Berührung kommt. Zunächst wird eine untere Deckschicht aufgespritzt, auf die noch flüssige untere Deckschicht wird ein feinkörniges hartes Granulat aufgeblasen und unmittelbar anschließend eine obere Deckschicht aus dem gleichen Beschichtungswerkstoff wie die untere Deckschicht aufgespritzt. Hiernach härten die ineinander fließenden Teilschichten mit den Granulateinschlüssen zu einer Deckschicht aus.

Nachteilig bei dem Aufbau dieser Schaltafel ist, dass die Oberseite der Schaltafel und der angrenzende Metallrahmen von einer gemeinsamen Deckschicht überzogen sind. Die unterschiedlichen Wärmeausdehnungskoeffizienten von Holz und Metall können daher zu einem Reißen der Deckschicht führen. Außerdem ist das Beschichtungsverfahren durch die Vielzahl der aufzubringenden Schichten und der zusätzlichen Zeit zum Aushärten der Grundschicht sehr aufwendig. Auch sind neben der Ober- und Unterseite die Schnittkanten nach einem Zuschneidevorgang in einem weiteren Arbeitsschritt einzeln zu beschichten. Um das Aushärten der Grundschicht zu beschleunigen, kann in einem zusätzlichen Arbeitsschritt die Platte in einem Klimaschrank mit einer hohen Luftfeuchtigkeit verbracht werden. Außerdem ist bedingt durch die vielen verschiedenartigen Arbeitsschritte auch ein spezieller Mehrfachspritzkopf erforderlich.

Der Erfindung liegt die Aufgabe zugrunde, ein einfaches Verfahren zum Vergüten durch Beschichten der Oberflächen von Trägertafeln, insbesondere von Holztafeln, und eine beschichtete Trägertafel, insbesondere Holztafel zu schaffen, wobei die Oberflächenbeschichtung der Trägertafel eine optimierte Standzeit aufweist.

Diese Aufgabe wird erfindungsgemäß mit einem Verfahren gelöst, welches die Merkmale des Patentanspruches 1 aufweist. Außerdem wird diese Aufgabe mit einer Holztafel gelöst, welche nach diesem Verfahren hergestellt sein kann und die Merkmale der Anspruches 13 aufweist. Vorteilhafte Ausgestaltungen des Verfahrens sind in den Ansprüchen 2 bis 12 und der Trägerplatte in den Ansprüchen 14 bis 17 angegeben.

Erfindungsgemäß wird ein besonders einfaches Verfahren zum Vergüten durch Beschichten der Oberflächen einer Trägertafel, insbesondere einer Holztafel, bei dem eine Beschichtung aus Duroplast-Kunststoff aufgebracht wird, dadurch erreicht, dass bei Umgebungstemperatur und Umgebungsdruck auf zumindest die Oberseite der Trägertafel ein Duroplast-Kunststoff in fließfähigem Zustand aufgetragen und verteilt wird und nach dem Verteilen bei Umgebungstemperatur und Umgebungsdruck ausgehärtet wird. Dadurch brauchen keine zusätzlichen und kostenintensiven thermischen Prozesse stattfinden. Dies steht im Gegensatz zu bekannten Verfahren, bei denen eine Beschichtung nur mittels thermischer Prozesse möglich ist, um eine haftende und klebende Verbindung herzustellen.

Vorteilhafter Weise ist dieses erfindungsgemäße Beschichtungsverfahren bei Trägerplatten einsetzbar, die aus den nachstehend aufgeführten Materialien hergestellt sind: Holzwerkstoffe, nicht natürlich gewachsene Holzwerkstoffe (beispielsweise OSB-Platten, Span-Platten, MDF/HDF-Platten), nachwachsende Rohstoffe (beispielsweise Hanf, Flachs, Palmenblätter), synthetische Rohstoffe (beispielsweise Buckyballs (Buckminsterfullerene)) und CFK - Kohlefaserwerkstoffe.

Der verwendete Duroplast-Kunststoff weist eine hohe mechanische Festigkeit auf, ist plastisch, elastisch, unlösbar und unschmelzbar. Dies ist wichtig, da die Oberfläche einer Trägerplatte durch Hitze, die beispielsweise auf einer Baustelle durch Schweißarbeiten in der Nähe einer Schalplatte oder im Versuchsbetrieb auf einem Labortisch auftreten kann, beschädigt werden kann. Schweißperlen oder andere heiße Gegenstände prallen auf der erfindungsgemäßen Beschichtung ab. Bei einer bekannten Kunststoffschalhaut schweißen sie sich hingegen ein.

Aufgrund geringerer Sprödigkeit des Beschichtungsmaterials bzw. des Verbundwerkstoffes insgesamt wird ein besseres Nagelverhalten erreicht und ein Abplatzen bei Durchnagelung des Beschichtungsmaterials vermieden, insbesondere auch eine Rissbildung. Durch die erfindungsgemäße Beschichtung und auch Erneuerung der Beschichtung wird die Lebensdauer der entsprechend ausgerüsteten Trägertafeln, insbesondere Holztafeln, erheblich verlängert.

Es ergibt sich eine hohe Abriebfestigkeit der ausgehärteten Beschichtung, die außerdem unlöslich mit dem beispielsweise aus Holzwerkstoff oder einem Faserwerkstoff bestehenden Untergrund verbunden ist. Die Oberfläche der entsprechend ausgestatteten Trägertafel, insbesondere Schaltafel, ist durchnagelbar, wasserundurchlässig, seewasserfest und nicht schrumpfend. Außerdem wird eine Rissbildung verhindert. Die Oberfläche ist darüber hinaus farbgebungsunabhängig. Auch ist das Oberflächenprofil und die Oberflächenbeschaffenheit einstellbar. Eine Reparatur- und Sanierungsfähigkeit ist gegeben. Die beschichteten Trägertafeln sind an den jeweiligen Einsatzzweck von der Größe her anpassbar.

Die vorliegende Erfindung ist sowohl zum Beschichten der Oberflächen von neuen als auch zum nachträglichen Beschichten der Oberflächen von vorhandenen oder gebrauchten, mit einer verschlissenen Oberflächenvergütung versehenen Trägertafeln, insbesondere Holztafeln, geeignet. Sie dient einer wesentlichen Erhöhung der Abriebfestigkeit, der Kratzfestigkeit und der Ritzfestigkeit der Oberflächenbeschichtung, die auch nicht zur Rissbildung neigt. Daraus resultiert eine größere Einsatzhäufigkeit der entsprechend ausgerüsteten Trägertafeln, bevor deren Oberfläche erneuert werden muss.

Die erfindungsgemäß hergestellten Verbundwerkstoffe tragen deutlich zur Abfallminimierung bei, weil diese Verbundwerkstoffe bzw. Trägertafeln eine technische Langlebigkeit aufweisen und mehrfach repariert und erneuert werden können.

Hinzu kommt, dass die Lebensdauer beschichteter Holzwerkstoffe oder Faserwerkstoffe nachweislich verlängert werden kann, was zu einer sinnvollen erhöhten Nutzung natürlich nachwachsender Rohstoffe führt.

Vorteilhafterweise kann als Beschichtungsmittel ein Zwei-Komponenten-Kunststoff verwendet werden, der im wesentlichen aus einem flüssigen Reaktionsbasisharz mit thixotropierten Stoffen und einem Reaktionshärter besteht, dessen Komponenten unmittelbar vor der Verarbeitung zusammengeführt und miteinander vermischt werden, woraufhin das gelartige Gemisch vor dem Aushärten auf die Trägertafel aufgebracht wird. Die gelartige Konsistenz des Zwei-Komponenten-Kunststoffes verhindert erfolgreich die Nasenbildung nach dem Auftragen.

Die Komponenten des Beschichtungsmaterials werden in einem bestimmten Gewichtsverhältnis vermischt. Dieses Verhältnis ist neben der Vorbereitung der Oberfläche ein wesentlicher Bestandteil des Verfahrens, damit die Topfzeit des Zwei-Komponenten-Gemisches vor dem Erstarren desselben eingehalten wird. Ferner werden durch den Zusatz eines Härters die Eigenschaften der Elastizität und Härte beeinflusst.

Erfindungsgemäß wird für das Beschichten neuer oder auch wiederverwendbar zu machender Trägertafeln ein Duroplast-Kunststoff in Form eines Zwei-Komponenten-Systems verwendet. Das zunächst im fließfähigen Zustand befindliche Kunststoffmaterial härtet erst aus, nachdem es auf die entsprechenden Oberflächen aufgetragen und verteilt worden ist.

Besonders vorteilhaft können die Eigenschaften des Beschichtungsmittel derart eingestellt werden, dass nach dem Auftragen des Beschichtungsmittels auf die Oberfläche der Trägertafel das Beschichtungsmittel in die Oberfläche der Trägertafelein dringt und mit den Trägermaterialelemente im Bereich deren Oberfläche der Trägertafel ein Verbundbereich gebildet wird.

Das erfindungsgemäß verwendete Beschichtungsmaterial ist so konzipiert und eingestellt, dass es sowohl auf der waagerechten als auch auf den senkrechten Oberflächen der Seiten- und Stirnkanten allein aufgrund seiner Fließfähigkeit applizierbar ist, bevor es nach der einstellbaren Topfzeit bzw. Reaktionszeit erstarrt. Somit wird nicht nur das auf die Oberfläche der Trägertafel aufgetragene Duroplast aufgrund der ihm noch innewohnenden Fließfähigkeit gleichmäßig auf der Oberfläche verteilt, sondern auch über die Kanten, ohne eine, unerwünschte Nasenbildung. Somit werden also auch die Kanten bei einem einmaligen Durchlauf der Trägertafel bei der Beschichtung der Oberflächen derselben versiegelt. Das erfindungsgemäße Verfahren vereinigt also zwei Arbeitsschritte.

Erfindungsgemäß wird ein zunächst kapillarer flüssiger Kunststoff in flüssiger und thixotropierter Form auf die jeweils oben liegende Oberfläche der Trägertafel aufgetragen. Wegen der besonders eingestellten Oberflächenspannung des fließfähigen Kunststoffes kann dieser in einen mikrokapillaren Untergrund penetrieren. Durch diese Verbindung mit dem Holzmaterial des Trägers erhält man einen neuartigen Verbundstoff. Dieser zeichnet sich dadurch aus, dass die Beschichtung nicht mehr vom ursprünglichen Material des Trägers zu trennen ist.

Besonders vorteilhaft kann mit diesem Zwei-Komponenten-Kunststoff eine Eindringtiefe des Beschichtungsmittels in die Oberfläche der Trägertafel von mindestens 0,15 mm erreicht werden, die mit einer entsprechend guten Verbundwirkung zwischen der Beschichtung und der Trägertafel einhergeht. Vorzugsweise liegt die Eindringtiefe im Bereich von 0,15 bis 5mm.

Zusätzlich kann dem Zwei-Komponenten-Kunststoff vor dem Auftragen auf die Oberfläche der Trägertafel ein Verlaufadditiv beigemengt werden, das ein Selbstnivellieren des fließfähigen Kunststoffes auf der Oberfläche der Trägertafel begünstigt und somit nach dem Auftragen des Beschichtungsmittels dieses zu einer gleichmäßigen Beschichtung mit ebener Oberfläche sich ausgleicht. Die Viskosität des Zwei-Komponenten-Gemisches der Oberflächenbeschichtung ist so gewählt, dass vor dem Aushärten eine selbstnivellierende, oberflächenfüllende und vollflächige Beschichtung erhalten wird, die sich auch auf die Seitenkanten und Stirnkanten überträgt, ohne dort eine unerwünschte Nasenbildung hervorzurufen.

In einer vorteilhaften Verfahrensweise kann die Oberfläche der zu beschichtenden Holztafel vor dem Beschichten mit einem Schneid-/Schleifverfahren derart aufgerauht werden, dass eine mikrokapillare Oberflächenstruktur geschaffen wird, in die das Beschichtungsmittel nach dem Auftragen eindringt. Hierdurch wird das Eindringen des Beschichtungsmittels zur Schaffung des Verbundbereiches begünstigt. In diesem Zusammenhang wird unter einer Holztafel ein Holzwerkstoff verstanden, der zumindest abschnittsweise Bereiche einer natürlich gewachsenen Holzstruktur mit einer Ausrichtung der Holzfasern aufweist, die bei einer Pressspannplatte nicht mehr zu finden ist.

Besonders vorteilhaft kann das Schleifverfahren einen ersten und einen zweiten Arbeitsschritt aufweisen. In dem ersten Arbeitsschritt wird das Schleifwerkzeug gegen die Holzfaserrichtung geführt und in dem zweiten Arbeitsschritt wird das Schleifwerkzeug quer zur Holzfaserrichtung geführt. Hierdurch wird eine Aufstellung und Kappung der Holzfasern erreicht, um anschließend einen Verbund mit des Beschichtungsmaterial zu erzielen. Dieses spezielle Schleifverfahren ist von eigenständig erfinderischer Bedeutung.

Vorteilhafter Weise kann der Kunststoff auf eine neue oder abgenutzte und zuvor aufgearbeitete Trägertafel aufgetragen werden. Somit ist es möglich, Oberflächen gebrauchter Trägertafel, insbesondere Schaltafeln, derart zu sanieren, dass diese wie neue Trägertafel aussehen, was insbesondere für das Leihgeschäft von Trägertafelnvon Bedeutung ist. Dadurch ist eine weitaus höhere Lebensdauer von aus Holzwerkstoffen bestehenden Schaltafeln zu erzielen, jedoch lässt sich die Erfindung auch bei Trägertafeln, die aus anderen Materialien wie Holzwerkstoffen bestehen, einsetzen. In jedem Falle ist das Verfahren der Beschichtung von Trägertafeln, insbesondere Schaltafeln, mittels einer speziellen Kunststoffzubereitung deutlich wirtschaftlicher als bisher bekannte Verfahren. Instandsetzungskosten werden erfindungsgemäß minimiert. Die Erfindung zielt darauf ab, beschädigte, oder verschlissene Oberflächen in einem wirtschaftlichen Rahmen zu sanieren, um gebrauchte Trägertafeln, insbesondere Schaltafeln wiederverwenden zu können.

Das erfindungsgemäße Verfahren hat zum Ziel, dass das beschichtete oder auf das neu beschichtete Produkt der Qualität einer neuen Oberfläche entspricht. Für die Sanierung von Oberflächen gebrauchter Trägertafeln, insbesondere Schaltafeln, beschränkt sich die Erfindung auf Teilsanierung anstelle von einem kompletten Auswechseln der Trägertafeln, insbesondere Schaltafeln. Ein Kostenvergleich für die Sanierung anstelle eines Auswechselns von Trägertafeln, insbesondere Schaltafeln, zeigt, dass die Kosteneinsparungen nicht unerheblich sind. Bei Anwendung der Erfindung lassen sich Trägertafeln, insbesondere Schaltafeln, etwa dreimal so lang verwenden wie bekannte Trägertafeln, insbesondere Schaltafeln, was auch zu einer erheblichen Einsparung von Kosten führt.

Das erfindungsgemäße Beschichtungsmittel kann vorteilhafter Weise mechanisch aufgetragen oder aufgespritzt werden. Das Beschichtungsmaterial ist aufgrund seiner chemischen Zusammensetzung und der Reaktionszeit der beiden Komponenten individuell einstellbar. Es ist daher sowohl für eine manuelle Auftragung als auch für eine industrielle Nutzung, beispielsweise mittels eines Spritzverfahrens, geeignet. Für industrielle Beschichtungsverfahren bzw. Spritzverfahren ist die Topfzeit des Zwei-Komponenten-Gemisches dem angewandten Spritztechnikverfahren entsprechend einstellbar.

Vorteilhaft kann sein, das fließfähige Beschichtungsmittel über eine Auftragdüse ausfließen zu lassen, unter der die Trägertafel hindurchgeführt wird.

In bevorzugter Ausführungsform kann das Beschichtungsmittel auf die Oberseite und zusätzlich auf die daran anschließenden Randseiten aufgetragen werden. Da erfindungsgemäß die Oberflächen der Seitenkanten und Stirnkanten der Trägertafel ebenfalls eine Oberflächenbehandlung erfahren, wird eine Feuchtigkeitsaufnahme der Trägertafel reduziert. Dementsprechend werden negative Eigenschaften des Quellens und Schwindens des Trägermaterials verringert bzw. ganz ausgeschaltet.

Erfindungsgemäß wird bei einer Trägertafel, insbesondere Holztafel, mit einer Beschichtung aus einem Duroplast-Kunststoff, dadurch erreicht, dass die Beschichtung aus einem äußeren Deckbereich und einem darunter liegenden Verbundbereich besteht, wobei der Verbundbereich aus miteinander im Eingriff stehenden Trägertafel, insbesondere Holz- oder Nauturfasern und ausgehärtetem Duroplast-Kunststoff besteht, dass die Beschichtung eine hohe Abrissbeständigkeit von der Trägertafel hat.

In einer bevorzugten Ausführungsform kann der Verbundbereich eine Tiefe von mindestens 0,15 mm aufweisen. Vorzugsweise liegt die Eindringtiefe in einem Bereich von 0,15mm bis 5mm. Hierdurch ist ein sicher Verbund der Beschichtung mit dem Trägertafelwerkstoff gewährleistet und es besteht nicht nur ein bloßer haftender Kontakt zwischen der Beschichtung und der Trägertafeloberfläche.

Besonders vorteilhaft können die Oberseite und die hieran anschließenden Randseiten mit der Beschichtung versehen sein. Hierdurch wird Beschichtungsmaterial eingespart und ein Einsatz einer derart beschichteten Trägertafel als Schaltafel ist durchaus möglich.

Eine besonders gute Verbundwirkung zwischen den Trägertafelbestandteilen, insbesondere Holz- oder Naturfasern, und dem Kunststoff kann erreicht werden, wenn die Trägertafel aus Sperrholz ist.

Erfindungsgemäß ausgebildete Schaltafeln weisen eine geringe Betonhaftung auf, sind gegenüber Betontrennmitteln unempfindlich und beeinflussen den Bindeprozess des Zementes sowie des Erhärtens des Betons nicht. Auch führen sie zu keinen negativen Beeinflussungen des Betonsichtbildes.

Nachfolgend wird die vorliegende Erfindung an Hand von einem in einer Zeichnung dargestellten Ausführungsbeispiel näher erläutert. Es zeigen:
- Figur 1: eine ausschnittsweise Seitenansicht einer erfindungsgemäß beschichteten Schaltafel im Schnitt,
- Figur 2: eine Ausschnittsvergrößerung von Figur 1 aus dem Bereich der Beschichtung,
- Figur 3: einen Ausschnitt eines Randbereiches einer erfindungsgemäß beschichteten Schaltafeln im Schnitt,
- Figur 4: eine vergrößerte Seitenansicht einer Schaltafel nach einer ersten Vorbehandlungsstufe,
- Figur 5: eine der Figur 4 entsprechende Ansicht der Schaltafel nach einer zweiten Vorbehandlungsstufe,
- Figur 6: eine der Figur 4 entsprechende Ansicht der Schaltafel nach einer Beschichtung mit dem Kunststoff und
- Figur 7: eine Ausschnittsvergrößerung von Figur 6 aus dem Bereich des Endes einer Holzfaser.

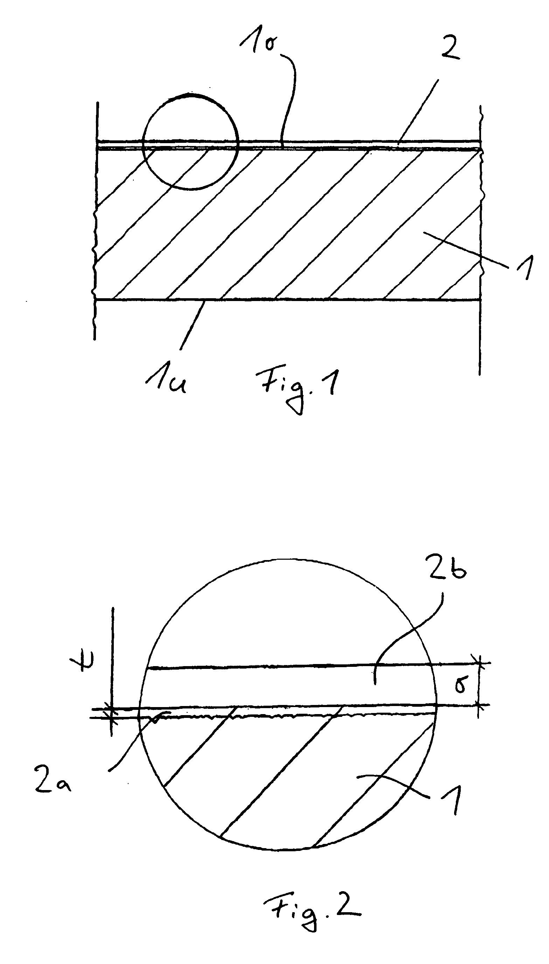

Die Figur 1 zeigt eine Seitenansicht eines Mittelabschnittes einer plattenförmigen vorzugsweise rechteckigen Trägertafel in Form einer Schaltafel 1, deren Oberseite 1o erfindungsgemäß mit einer Kunststoffbeschichtung 2 aus einem Duroplast versehen ist. Die Schaltafel 1 besteht aus einem Holzwerkstoff, vorzugsweise aus einem natürlich gewachsenen Holzwerkstoff mit einer vorgegebenen Holzfaserrichtung.

Anhand der Figur 2, die eine Ausschnittsvergrößerung von Figur 1 aus dem Bereich der Beschichtung 2 zeigt, ist der genaue Aufbau der Beschichtung 2 zu erkennen. Die Beschichtung 2 besteht im wesentlichen aus einem Verbundbereich 2a und einen hieran anschließenden aus dem gleichen Kunststoff der Beschichtung 2 bestehenden Deckbereich 2b. Unter dem Verbundbereich 2a wird der Bereich der Beschichtung 2 verstanden, in dem der Kunststoff der Beschichtung 2 nach dem Auftrag des Kunststoffes und vor dessen Aushärten in die Oberfläche des Holzwerkstoffes der Schaltafeln 1 kapillar einpenetriert ist und somit nach dem Aushärten einen innigen Verbund mit den Holzfasern eingegangen ist. Der Verbundbereich 2a weist somit mindestens eine Tiefe t von etwa 0,15 mm auf. Vorzugsweise liegt die Eindringtiefe t in einem Bereich von 0,15 mm bis 5 mm. Die Eindringtiefe hängt von den Eigenschaften des Kunststoffes und der bis zum Aushärten verbleibenden Zeit ab und könnte bis zu einem Durchtränken der Schaltafel führen sollte aber mindestens 0,15 mm betragen, um nicht nur eine bloße Haftung des Kunststoffes auf der Schalttafel 1 sondern die gewünschte Verbundwirkung mit einer hohen Ablösebeständigkeit zu erreichen. In einem Versuch wurde eine Eindringtiefe von etwa 150 mm erreicht. Hier wurde eine Stirnkante einer Sperrholzplatte beschichtet. Die erreichbare Eindringtiefe steht in direktem Zusammenhang mit der Dichte des zu beschichtenden Trägermaterials. Je höher die Dichte des Trägermaterials je geringer ist die zu erreichende Eindringtiefe. Außerdem können beispielsweise poröse Isolier- oder Dämmplatten mit einer Dichte von 200-300 kg/m³ durch die Beschichtung in Bezug auf ihre Festigkeit, Durchbiegung und Elastizität verstärkt werden. Die Höhe a des Deckbereiches 2b der Beschichtung 2 beträgt in dem Ausführungsbeispiel 0,7 mm, kann jedoch je nach Bedarf auch in einem Bereich von 0,2 mm bis 3 mm liegen.

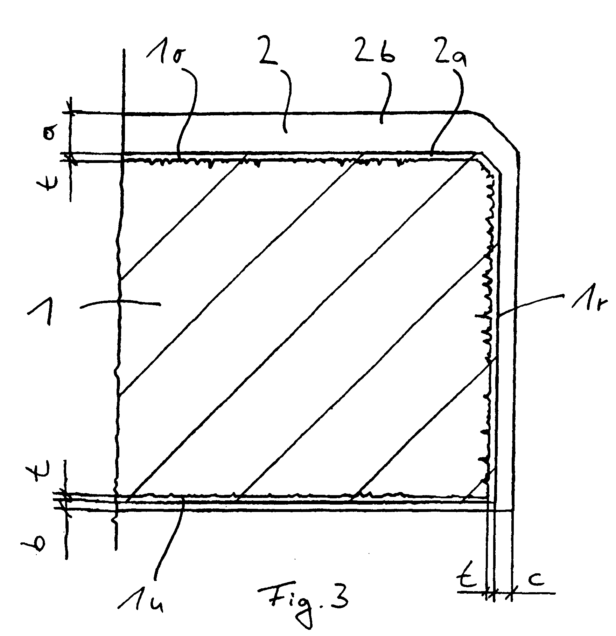

In der Figur 3 ist eine mit der Figur 1 vergleichbare Ansicht der erfindungsgemäß beschichteten Schaltafeln 1 dargestellt, jedoch ist hier ein Ausschnitt eines Randbereiches der Schaltafeln 1 gezeigt. Es ist ersichtlich, dass neben der Oberseite 1o auch die Randseite 1r und die Unterseite 1u mit der erfindungsgemäßen Beschichtung 2 versehen ist. Die Höhe b des Deckbereiches 2b der Beschichtung 2 an der Unterseite 1u der Schalplatte 1 beträgt in dem Ausführungsbeispiel 0,2 mm. Da diese Unterseite 1u üblicher Weise nicht mit dem Beton in Kontakt kommt, ist hier eine geringere Schichtdicke als an der Oberseite 1o gewählt worden. Die Höhe c des Deckbereiches 2b der Beschichtung 2 an der Randseite 1r der Schalplatte 1 beträgt in dem Ausführungsbeispiel 0,5 mm. Die Schaltafel 1 aus dem Holzwerkstoff ist somit vollständig von der Beschichtung ummantelt und somit wirksam gegen ein Eindringen von Feuchtigkeit und ein hierdurch bedingtes Aufquellen geschützt. Aus Kostengründen wird jedoch eine Ausführung bevorzugt in der nur die mit dem Beton in Kontakt kommende Oberseite und die Randseiten mit der erfindungsgemäßen Beschichtung versehen werden.

In den Figuren 4 bis 7 wird an Hand von vergrößerten Seitenansichten der Oberfläche 1o der Schaltafel 1 die Vorbereitung der Oberfläche der Schaltafel 1 für das Auftragen der Beschichtung 2 näher erläutert.

Die Figur 4 zeigt eine vergrößerte Seitenansicht einer Schaltafel 1 nach einer ersten Vorbehandlungsstufe mit einem rotierenden Schneid-/Schleifwerkzeug. Das Schneid-/Schleifwerkzeug ist entgegen der Faserrichtung entlang der Oberseite 1o der Schalplatte 1 geführt worden und hat ein Aufrichten der einzelnen Holzfasern 1a bewirkt.

In der Figur 5 ist eine der Figur 4 entsprechende Ansicht der Schaltafel 1 jedoch nach einer zweiten Vorbehandlungsstufe dargestellt. Es ist ersichtlich, dass durch eine Führung des Schneid-/Schleifwerkzeuges in einer zweiten Vorbehandlungsstufe quer zur Holzfaserrichtung die oberen freien Enden 1b (siehe Figur 4) der aufrecht stehenden Holzfasern 1a von dem Schneid-/Schleifwerkzeug abgetrennt worden sind. Mit Hilfe des Schneid-/Schleifwerkzeuges wird etwa eine Rauigkeit der Oberfläche des Holzwerkstoffes erreicht, die im Bezug auf die ereichte Rauigkeit im technischen Sinne mit einer Behandlung mit einem Schleifpapier der Körnung 80 erreicht werden kann. Außerdem überwiegt bei dem Schneid/Schleifwerkzeug die schneidende Funktion.

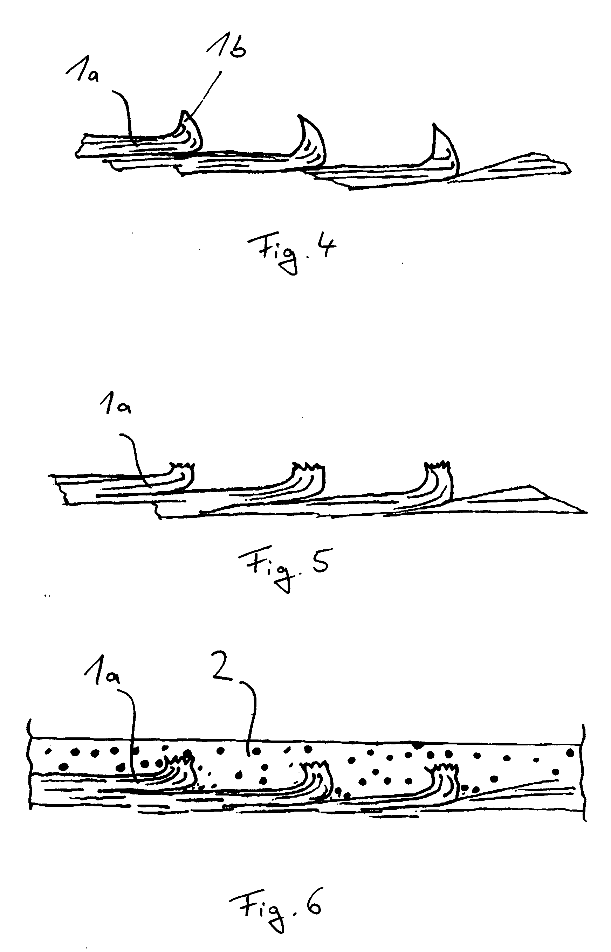

Die Figur 6 zeigt die Oberseite 1o der Schaltafel gemäß Figur 5 nach erfolgtem Auftrag der Beschichtung 2. Es ist ersichtlich, dass durch die Vorbehandlung der Oberfläche der Schaltafel 1, ein mikrokapillarer Untergrund geschaffen wird, der das Einpenetrieren des Kunststoffes in die Schaltafel 1 begünstigt und ein inniger Verbund zwischen den aufgerichteten Holzfasern 1a und dem Kunststoff der Beschichtung 2 erreicht wird.

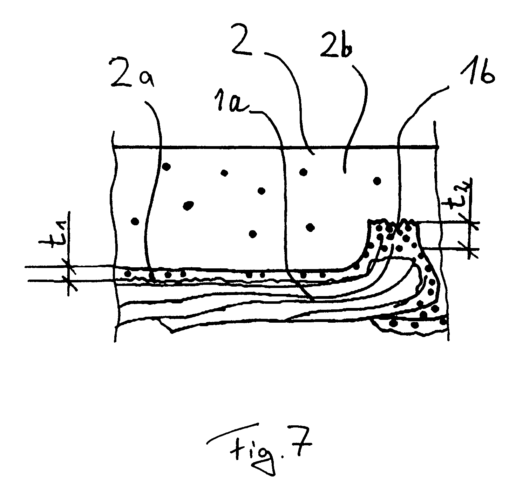

In der Figur 7 ist eine Ausschnittsvergrößerung von Figur 6 aus dem Bereich des oberen Endes 1b einer Holzfaser 1a gezeigt. Es ist ersichtlich, dass das Beschichtungsmittel 2 besonders gut und somit tief mit einer Eindringtiefe t₂ in das hochgestellte und abgeschnittene obere Ende 1b der Holzfaser 1a eindringt, da das obere Ende 1b der Holzfaser 1a konzentriert kapillare Öffnungen aufweist. Die Eindringtiefe t₂ ist daher größer als die Eindringtiefe t₁ des Beschichtungsmittels entlang der übrigen Längsseiten der Holzfaser 1a und auch die erzielbare Verbundwirkung ist daher besonders gut. Der Vorteil des besonderen Schneid/Schleifverfahrens ist somit direkt ersichtlich.

Anhand der Figuren 1 bis 7 werden nachfolgend zum besseren Verständnis der Erfindung die für eine Beschichtung einer Schaltafel erforderlichen Arbeitsschritte näher erläutert.

In einem ersten Arbeitsschritt werden die Schaltafeln auf das gewünschte Endmaß zugeschnitten und mit gewünschten Bohrungen, Aussparungen und Konturen versehen. Anschließend werden alle zu beschichtenden Oberflächen der Schaltafel 1 mit den zu den Figuren 4 und 5 beschrieben Schneid-/Schleifverfahren vorbereitet, die zu einer Oberfläche der Schaltafel 1 mit aufgerichteten und in ihrer Länge gekappten Holzfasern 1a führt, die einen mikrokapillaren Untergrund schafft. Für das nachfolgende erfindungsgemäße Beschichten der Holzplatte wird ein Zwei-Komponenten-Kunststoff verwendet, der im wesentlichen aus einem lösungsmittelfreien flüssigen Reaktionsbasisharz, thixotropierten Stoffen und einem Reaktionshärter besteht. Zunächst wird der Zwei-Komponenten-Kunststoff in einem angegebenen Mischungsverhältnis angesetzt und homogen miteinander vermischt. In üblicher Weise lässt sich die sogenannte Topfzeit des flüssigen Reaktionskunststoffes, in der der Kunststoff vor dem Aushärten verarbeitbar ist, durch Abstimmen der Menge bzw. Art der Härtekomponente einstellen. Im vorliegenden Fall beträgt die Topfzeit etwa 20 Minuten. Dieser durch die thixotropierte Stoffen gelartige Zwei-Komponenten-Kunststoff wird jetzt auf die vorbehandelten Oberflächen, vorzugsweise die Oberseite 1o und die Randseiten 1r, der Holztafel mechanisch oder über Spritzwerkzeuge gleichmäßig aufgebracht. Der gelartige Zwei-Komponenten-Kunststoff penetriert sofort in die mikrokapillare Oberfläche der Holztafel zumindest mit der Eindringtiefe t von etwa 0,15 mm ein. Vorzugsweise liegt die Eindringtiefe in einem Bereich zwischen 0,15 mm bis 5mm. Durch die gelartigen Eigenschaften des Zwei-Komponenten neigt dieser auch bei einer horizontal liegenden Holzplatte auch im Bereich der senkrechten Randseiten nicht zu einer Nasenbildung. Zu diesem Zeitpunkt also nach erfolgten Einpenetrieren des Zwei-Komponenten-Kunststoff ist die Oberfläche des Zwei-Komponenten-Kunststoff noch leicht wellig, was sich jedoch durch die zu dem Zwei-Komponenten-Kunststoff zugefügten Verlaufadditive, die eine Selbstnivellierung des Kunststoffes bewirken, ausgleicht. Durch eine chemische Reaktion härten die beiden Komponenten des Beschichtungsmittels bei Raumtemperatur und bei Umgebungsdruck zu einem festen abriebbeständigen Duroplast-Kunststoff aus. Unter Raumtemperatur ist etwa eine Temperatur zwischen 20 und 25° C zu verstehen. Diese Duroplast-Kunststoffe werden auch Duromere genannt. Aufgrund ihrer molekularen Struktur weisen diese Kunststoffe eine hohe mechanische Festigkeit auf, sind unlöslich und unschmelzbar und verbinden sich nach dem Aushärten dauerhaft mit der Trägertafel, insbesondere der Holztafel, durch den mit den Trägertafelelementen beziehungsweise Holzfasern geschaffenen Verbund. Vor dem Aushärten zeigen die Duromere ein plastisch bis elastisches Verhalten. Diese Eigenschaften stehen im Gegensatz zu den auch für die Beschichtung von Schaltafeln verwendeten Thermoplasten wie z. B. Polypropylen, die sich durch eine geringe Härte auszeichnen, zähelastisch und schmelzbar sind.

In einem weiteren Arbeitsschritt kann dann auch zusätzlich die Unterseite 1u der Schalplatte 1 mit der erfindungsgemäßen Beschichtung 2 versehen werden.

Die Zusammensetzung des Zwei-Komponenten-Kunststoffes für die Beschichtung von Schaltafeln ist beispielsweise wie folgt:

| | | |
|---|---|---|
| 50 | Gewichtsprozent | flüssiges Reaktionsbasisharz |
| 8 | Gewichtsprozent | Füllstoff, Zuschlagsstoff |
| 24 | Gewichtsprozent | anorganisches Weißpigment |
| 1 | Gewichtsprozent | Eisenoxid Gelbpigment |
| 0,5 | Gewichtsprozent | organischer Gasruß |
| 1 | Gewichtsprozent | thixotropierte Stoffe |
| 0,5 | Gewichtsprozent | Verlaufadditiv |
| 1 | Gewichtsprozent | Mattierungsmittel |

Vor der Verarbeitung zuzumischen:

| | | |
|---|---|---|
| 14 | Gewichtsprozent | Reaktionshärter |

Für eine Beschichtung von Trägerplatten aus Faserwerkstoffen ist eine Kunststoffmischung mit etwa 70 Gewichtsprozent flüssiges Reaktionsbasisharz, 20 Gewichtsprozent Reaktionshärter geeignet. Die übrigen Bestandteile werden proportional angeglichen. Der Anteil des flüssigen Reaktionsbasisharzes liegt somit etwa in einem Bereich von etwa 45 - 75 Gewichtsprozent, wobei der Reaktionshärter 10 - 22 Gewichtsprozent beträgt.

Das flüssige Reaktionsbasisharz ist beispielsweise ein lösungsmittelfreies Epoxi-Flüssigharz oder PUR. Bevorzugt ist ein niedrig viskoses (niedrig molekulares) Harz, deren Oberflächenspannung in Hinblick auf gute Benetzung und gutes Eindringverhalten in Bezug auf die Oberfläche des Holzwerkstoffes eingestellt ist. Der vor der Verarbeitung zuzumischende Reaktionshärter enthält speziell polykondensierte Polyaminhärter oder Isocyanat.

Obwohl die Erfindung in dem Ausführungsbeispiel an Hand einer Schaltafel näher beschrieben worden ist, eignet sich die erfindungsgemäße Erfindung allgemein für eine Beschichtung von Holzplatten. Somit ergeben sich weitreichende Einsatzgebiete für die erfindungsgemäße Beschichtung Trägertafeln. Die hierfür verwendeten Trägermaterialien lassen sich grob in Holzwerkstoffe, nicht natürlich gewachsene Holzwerkstoffe (OSB-Platten, Span-Platten, MDF/HDF-Platten), nachwachsende Rohstoffe (Hanf, Flachs, Palmenblätter), synthetische Rohstoffe (Buckyballs (Buckminsterfullerene)) und CFK-Kohlefaserwerkstoffe einteilen. Beispielhaft seien hier die folgenden Anwendungen und geeignete Trägermaterialien aufgezählt: Bambus, Samenhaare (Baumwolle, Akon, Pappel), Fasern aus Sprossachsen (Hanf, Flachs, Nessel, Jute, Kenaf, Ramie), Fruchthaare (Kapok), Unterblattfasern (Abacä, Manila), Blattspreitenfasern (Sisal, Yucca, Phormium), Blattstielfasern (Piassava),. Wellpappe, Dachplatten für Dacheindeckungen in wasserdichter oder wasserabweisender Ausführung, Furnierund Tischlerplatten für Innen- und Außenanwendungen, Buchen-Furnierplatten, Douglas Fir und Nadelsperrholzplatten, Profilsperrholz, Deco-Stabplatten, Leimholzplatten, Dreischichtholzplatten, Treppenstufenplatten, Spezialplatten für Haustüren, Sandwichplatten, Spezialplatten für Fahrzeugbau, Spanplatten in E1-Qualität oder roh, Möbelbauplatten, Span-Verlegeplatten, Hartfaserplatten, OSB-Platten (oriented strand board, Mehrschichtplatten aus langen, schlanken Spänen), MDF-Platten (mitteldichte Faserplatten), HDF-Platten (hochdichte Faserplatten), Weichfaserdämmplatten, furnierte Spanplatten, kunststoffbeschichtete Spanplatten, Fensterbänke, Küchen Arbeitsplatten, massive Arbeitsplatten, Forming-Elemente, Haustüren, Zementgebundene Verlegeplatten, Profilbretter, Hobeldielen, Fußbodensysteme, Laminate, Parkett, Fassadensysteme, Balkonsysteme, Zäune, Bänke, Carportsysteme, Elementehäuser, Spielgeräte, Holzfliesen, Holzdielen, Tische und Stühle, Beeteinfassungen, Palisaden, Pflanzkästen, Paneele.

Als weiteres Einsatzgebiet der erfindungsgemäßen Beschichtung kommt die Verwendung im Transportwesen in Frage. Hier zum Einsatz kommende zu beschichtende Trägermaterialien sind beispielsweise: Paletten, Packdeckel, Holzkisten, Tauschpaletten, Transportbehälter, Schnittholz, Containerböden, Einwegpaletten (geringes Eigengewicht, individuelles Maß), Zweiwegpalette (von einem Hubgerät durch die von außen angebrachten Kanthölzer nur von zwei Seiten aufnehmbar), Vierwegpalette (die von der Zweiwegpalette bekannten Kanthölzer werden durch Klötze ersetzt, so dass ein Einfahren des Hubgerätes von 4 Seiten möglich ist), Packdeckel (Schutzfunktion der Ladung), Holzkisten, Transportbehälter, Verpackungsmaterialien wie Verpackungsleisten, Verpackungsunterleger, Keile, Streben, jeweils aus Schnittholz, Containerböden.

Auch ergeben sich Vorteile für Anwendungen in Hygienebereichen, da die beschichteten Oberflächen leicht zu reinigen sind. Ein beispielhaftes Einsatzgebiete ist ein Bahnwaggon für Viehtransporte. Auch kann die Beschichtung als Transportunterlage für heiße Produkte (Gusseisenprodukte) verwendet werden.

Außerdem sind unter Schalplatten im vorgenannten Sinne auch Rahmenschalungssysteme, Schalhäute, Bauschalungsplatten und Holzbeläge für Gerüstsysteme und ähnliche Einsatzzwecke zu verstehen. Dieses erfindungsgemäße Beschichtungsverfahren eignet sich in gleicher Weise für neue Holzplatten oder zur Regeneration von gebrauchten Holzplatten nach entsprechender Entfernung der alten Beschichtung.

### Bezugszeichenliste

- 1: Schaltafel
- 1a: Holzfaser
- 1b: oberes Ende
- 1o: Oberseite
- 1r: Randseite
- 1u: Unterseite
- 2: Beschichtung
- 2a: Verbundbereich
- 2b: Deckbereich
- a: Höhe
- b: Höhe
- c: Höhe
- t, t₁, t₂: Eindringtiefe

## Patentansprüche

1. Verfahren zum Vergüten durch Beschichten der Oberflächen einer Trägertafel (1), insbesondere einer Holztafel, bei dem eine Beschichtung (2) aus Duroplast-Kunststoff aufgebracht wird,
**dadurch gekennzeichnet,**
**dass** bei Umgebungstemperatur und Umgebungsdruck auf zumindest die Oberseite der Trägertafel (1) ein Duroplast-Kunststoff in fließfähigem Zustand aufgetragen und verteilt wird und nach dem Verteilen bei Umgebungstemperatur und Umgebungsdruck ausgehärtet wird.

2. Verfahren nach Anspruch 1, **dadurch gekennzeichnet, dass** als Beschichtungsmittel ein Zwei-Komponenten-Kunststoff verwendet wird, der im wesentlichen aus einem flüssigen Reaktionsbasisharz mit thixotropierten Stoffen und einem Reaktionshärter besteht, dessen Komponenten unmittelbar vor der Verarbeitung zusammengeführt und miteinander vermischt werden, woraufhin das gelartige Gemisch vor dem Aushärten auf der Trägertafel (1) aufgebracht wird

3. Verfahren nach Anspruch 1 oder 2, **dadurch gekennzeichnet, dass** die Eigenschaften des Beschichtungsmittel derart eingestellt sind, dass nach dem Auftragen des Beschichtungsmittels auf die Oberfläche der Trägertafel (1) das Beschichtungsmittel in die Oberfläche der Holztafel eindringt und mit den Holzfasern der Trägertafel (1) ein Verbundbereich (1a) gebildet wird.

4. Verfahren nach Anspruch 3, **dadurch gekennzeichnet, dass** die Eindringtiefe (t) des Beschichtungsmittels in die Oberfläche der Trägertafel (1) und somit die Verbundbereich (1a) mindestens 0,15 mm beträgt, vorzugsweise in einem Bereich von etwa 0,15 mm bis 5 mm liegt.

5. Verfahren nach einem der Ansprüche 1 bis 4, **dadurch gekennzeichnet, dass** dem Zwei-Komponenten-Kunststoff vor dem Auftragen auf die Oberfläche der Trägertafel (1) ein Verlaufadditiv beigemengt wird, das ein Selbstnivellieren des fließfähigen Kunststoffes auf der Oberfläche der Trägertafel (1) begünstigt, und somit nach dem Auftragen des Beschichtungsmittels dieses sich zu einer gleichmäßigen Beschichtung (2) mit ebener Oberfläche ausgleicht.

6. Verfahren nach einem der Ansprüche 1 bis 5, **dadurch gekennzeichnet, dass** die Oberfläche der zu beschichtenden einer als Holztafel ausgebildeten Trägertafel (1) vor dem Beschichten mit einem Schleifverfahren derart aufgerauht wird, dass eine mikrokapillare Oberflächenstruktur geschaffen wird, in die das Beschichtungsmittel nach dem Auftragen eindringt.

7. Verfahren nach Anspruch 6, **dadurch gekennzeichnet, dass** das Schleifverfahren einen ersten und einen zweiten Arbeitsschritt aufweist, in dem ersten Arbeitsschritt das Schleifwerkzeug gegen die Holzfaserrichtung geführt wird und in dem zweiten Arbeitsschritt das Schleifwerkzeug quer zur Holzfaserrichtung geführt wird.

8. Verfahren nach einem der Ansprüche 1 bis 7, **dadurch gekennzeichnet, dass** der Kunststoff auf eine neue oder abgenutzte und zuvor aufgearbeitete Trägertafel (1) aufgetragen wird.

9. Verfahren nach einem der Ansprüche 1 bis 8, **dadurch gekennzeichnet, dass** das Beschichtungsmittel mechanisch aufgetragen oder aufgespritzt wird.

10. Verfahren nach einem der Ansprüche 1 bis 8, **dadurch gekennzeichnet, dass** das fließfähige Beschichtungsmittel über eine Auftragdüse ausfließt, unter der die Trägertafel (1) hindurchgeführt wird.

11. Verfahren nach einem der Ansprüche 1 bis 10, **dadurch gekennzeichnet, dass** das Beschichtungsmittel auf die Oberseite (1o) und die daran anschließenden Randseiten (1r) aufgetragen wird.

12. Verfahren nach einem der Ansprüche 1 bis 11, **dadurch gekennzeichnet, dass** die Trägerplatten (1) aus Holzwerkstoff, nicht natürlich gewachsenen Holzwerkstoff, nachwachsenden Rohstoff, synthetischen Rohstoff oder Kohlefaserwerkstoffe hergestellt sind.

13. Trägertafel, insbesondere Holztafel, mit einer Beschichtung (2) aus einem Duroplast-Kunststoff, die insbesondere mit einem Verfahren gemäß den Ansprüchen 1 bis 12 hergestellt wird,
**dadurch gekennzeichnet,**
**dass** die Beschichtung (2) aus einem äußeren Deckbereich (2b) und einem darunter liegenden Verbundbereich (2a) besteht, der Verbundbereich (2a) aus miteinander im Eingriff stehenden Trägerplattenbestandteilen, insbesondere Holzfasern (1a), und ausgehärtetem Duroplast-Kunststoff besteht.

14. Trägertafel nach Anspruch 13, **dadurch gekennzeichnet, dass** der Verbundbereich (2a) eine Tiefe (t) von mindestens 0,15 mm aufweist, vorzugsweise in einem Bereich von etwa 0,15 mm bis 5 mm liegt.

15. Trägertafel nach Anspruch 13 oder 14, **dadurch gekennzeichnet, dass** die Oberseite (1o) und die hieran anschließenden Randseiten (1r) mit der Beschichtung (2) versehen sind.

16. Trägertafel nach einem der Ansprüche 13 bis 15, **dadurch gekennzeichnet, dass** die Trägertafel (1) eine Holztafel aus Sperrholz ist.

17. Trägertafel nach einem der Ansprüche 13 bis 16, **dadurch gekennzeichnet, dass** die Trägerplatten (1) aus Holzwerkstoff, nicht natürlich gewachsenen Holzwerkstoff, nachwachsenden Rohstoff, synthetischen Rohstoff oder Kohlefaserwerkstoffe hergestellt sind.
